# EUROPÄISCHE PATENTSCHRIFT

(11) **EP 0 387 199 B1**
(45) Veröffentlichungstag und Bekanntmachung des Hinweises auf die Patenterteilung: **22.09.1993**
(21) Anmeldenummer: 90810162.9
(22) Anmeldetag: 02.03.1990
(51) Int. Cl.: F16K 27/12

(54) **Abdeckung für ein an einer Wand befestigtes Eckventil**
Cover for a wall mounted corner valve
Cache pour une soupape d'angle montée sur un mur

(30) Priorität: 10.03.1989 CH 902/89
(43) Veröffentlichungstag der Anmeldung: 12.09.1990
(73) Patentinhaber: Geberit AG, CH-8645 Jona (CH)
(72) Erfinder: Hubatka, Alex, CH-8735 St. Gallenkappel (CH); Dolder, René, CH-8645 Jona (CH)
(74) Vertreter: Groner, Manfred

(56) Entgegenhaltungen:
- US-A- 4 301 828

## Beschreibung

Die Erfindung betrifft eine Abdeckung nach dem Oberbegriff des unabhängigen Patentanspruchs 1. Eine Abdeckung dieser Gattung ist durch die US-A-4,301,828 bekannt. Diese weist zu ihrer Befestigung eine Platte mit einem Flansch auf, die mittels Nieten oder Schrauben oder auch durch Schweissung mit einer Wand verbunden wird. Die Platte muss vor dem Anbringen des Eckventils mit der Wand verbunden werden. Ein Anbringen der Abdeckung an einem bereits montierten Eckventil ist deshalb nicht möglich.

Eine ähnliche, bekannte Abdeckung weist eine zylindrische Hülse mit einem seitlichen Durchgang auf, in die das Eckventil eingesetzt wird. Eine Rosette, ein weiterer hülsenförmiger Teil, ein Deckel sowie weitere Teile sind hier notwendig, um das Eckventil vollständig abzudecken und die Abdeckung zu fixieren. Damit die Abdeckung montiert oder ausgewechselt werden kann, darf das Eckventil an den zu- und wegführenden Leitungsteilen nicht angeschlossen sein, das heisst es muss gegebenenfalls zum Anbringen der Abdek- kung abmontiert werden. Nachteilig ist ebenfalls, dass diese Abdeckung weitgehend auf zylindrische Formen einge- schränkt ist.

Der Erfindung liegt die Aufgabe zugrunde, eine Abdeckung der genannten Gattung zu schaffen, welche auch bei einem bereits angeschlos- senen Eckventil angebracht und gegebenenfalls gelöst werden kann und die in der Formgebung weitgehend frei ist. Die Aufgabe wird durch die Erfindung gemäss Anspruch 1 gelöst. Die Mittel zum Befestigen der Abdeckung werden bei wenigstens teilweise getrennten schalenförmigen Teilen auf das Eckventil aufgeschoben. Anschliessend werden die schalenförmigen Teile aneinandergelegt, wobei sie die genannten Mittel sowie das Eckventil vollständig umschliessen. Abschliessend werden beiden genannten Teile miteinander verbunden. Dies ist auch bei angeschlossenem Eckventil möglich und ebenso einfach kann die Abdeckung entfernt werden. Die äussere Gestalt dieser schalenförmigen Teile ist im wesentlichen keiner Einschränkung unterworfen, weshalb die erfindungsgemässe Abdeckung in der Formgebung beispielsweise an einen Spülkasten angepasst werden kann.

Nach einer Weiterbildung der Erfindung sind die beiden schalenförmigen Teile über ein Gelenk klappbar miteinander verbunden. Durch diese Weiterbildung ist es möglich, die Abdeckung aus sehr wenigen Einzelteilen, beispielsweise aus zwei Einzelteilen zu realisieren. Besteht dieses Gelenk gemäss einer vorteilhaften Weiterbildung aus zwei Filmscharnieren, und sind zwischen diesen Scharnieren die Mittel zum Befestigen der Abdeckung angeordnet, so kann mit einem einzigen Spritzgussteil der wesentlichste Teil der Abdeckung realisiert werden.

Eine besonders einfache Montage der Abdeckung ergibt sich dann, wenn diese seitlich auf das Eckventil aufsteckbar ist.

Ist gemäss einer Weiterbildung der Erfindung zwischen den schalenförmigen Teilen ein Teil angebracht, mit dem die Abdeckung gegen die Wand gespannt werden kann, so ist es möglich, in einfacher Weise auch bei unterschiedlichen Wandabständen des Eckventils eine sichere Befestigung der Abdeckung zu erreichen. Das Spannen der Abdeckung gegen die Wand wird in konstruktiv besonders vorteilhafter Weise dadurch gelöst, dass ein Klemmring mit einer schraubenförmig ansteigenden Fläche zwischen den schalenförmigen Teilen drehbar gelagert angebracht wird. Dieser Klemmring wird gedreht, bis die schraubenförmig ansteigende Fläche an dem parallel zur Wand verlaufenden Teil des Eckventils anliegt und das Verbindungsteil an die Wand klemmt.

Weitere vorteilhafte Merkmale der Erfindung ergeben sich aus den übrigen abhängigen Ansprüchen sowie aus der nachfolgenden Beschreibung sowie den Zeichnungen, anhand derer nachfolgend ein Ausführungsbeispiel der Erfindung beschrieben wird. Es zeigen:
- Fig. 1 und 2: Seitenansicht einer an einem Eckventil angebrachten Abdeckung gemäss der Erfindung,
- Fig. 3: eine Ansicht eines Teils der Abdeckung,
- Fig. 4: eine Seitenansicht eines Klemmringes, und
- Fig. 5: eine weitere Ansicht des Teils nach Fig. 3.

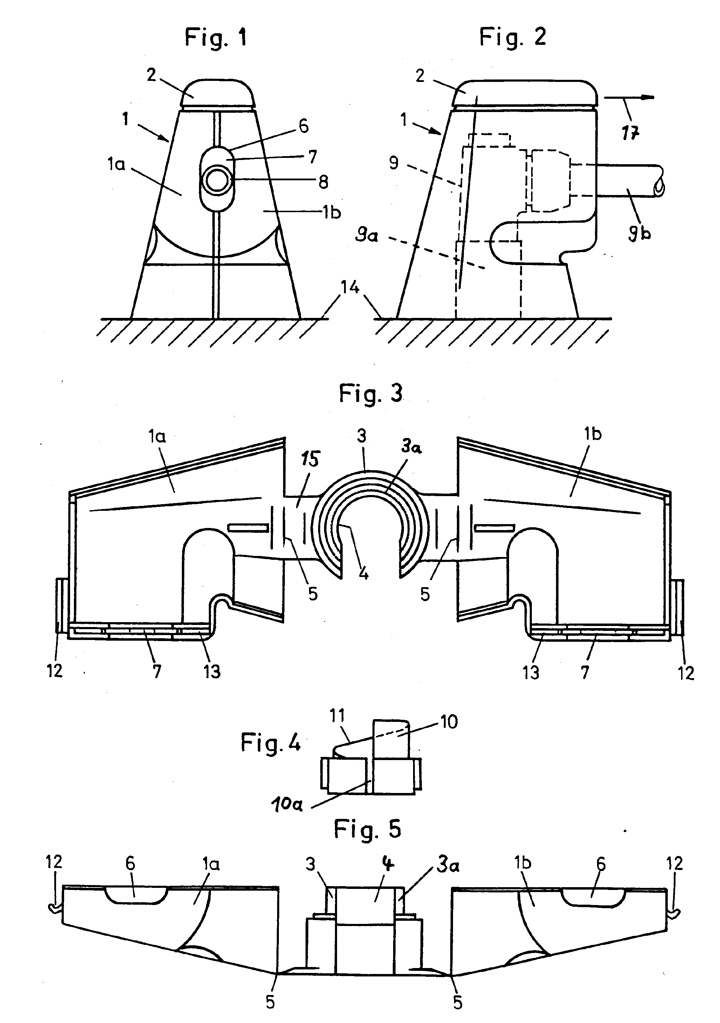

Wie die Fig. 3 und 5 zeigen, weist die Abdeckung zwei schalenförmige Teile 1a und 1b auf, die durch ein angeformtes Verbindungsteil 15 gelenkig miteinander verbunden sind. Die Teile 1a und 1b können unabhängig voneinander um je ein Filmscharnier 5 verschwenkt werden. Am Verbindungsteil 15 ist eine Befestigungshülse 3 mit einer seitlichen Oeffnung 4 zum Befestigen der Abdeckung am Eckventil angeordnet. Die Befestigungshülse 3 ist am freien Ende zur drehbaren Lagerung eines Klemmringes 10 stufenförmig ausgebildet. Der Klemmring 10 weist seitlich einen Schlitz 10a auf, so dass dieser Ring radial beschränkt dehnbar ist. Auf der Innenseite des Rings 10 sind zwei gegenüberliegende und axial verlaufende Rippen angebracht, die mit axialen Rillen 3a am Umfang der Befestigungshülse 3 zusammenwirken. Der Klemmring 10 und die Befestigungshülse 3 werden separat unter elastischer Dehnung auf das Eckventil aufgeschoben und nachher zusammengesetzt.

Die schalenförmigen Teile 1a und 1b können in die in den Fig. 1 und 2 gezeigte Lage zusammengeklappt werden. In dieser Position liegen zwei Rastnocken 12 im Abstand und parallel gegenüber. Auf diese Rastnocken 12 ist ein Deckel 2 aufgerastet. Die Nocken 12 sind so dimensioniert, dass der Deckel in seiner Längsrichtung begrenzt verschiebbar ist. Dieser Deckel 2 verbindet die beiden Teile 1a und 1b fest miteinander. Um den Deckel zu lösen wird der in Richtung des Pfeiles 17 bis etwa auf seine halbe Länge nach aussen geschoben. In dieser Position kann er am vorstehenden Ende gefasst und ausgerastet werden. In der geschlossenen Position greifen zudem gestufte Ränder 13 ineinander, so dass die Teile 1a und 1b gegeneinander nicht verschoben werden können.

Zwischen die schalenförmigen Teile 1a und 1b ist in eine Oeffnung 6 eine Blende 7 mit einer Oeffnung 8 für den Durchtritt des Eckventils 9b eingelegt. Die Blende 7 ist seitlich offen und kann unter Dehnung auf den Teil 9b aufgeschoben sowie in der Oeffnung 6 begrenzt verschoben werden.

Um die Abdeckung am Eckventil 9 anzubringen, werden der Klemmring 10 und die Befestigungshülse 3 jeweils unter Dehnung seitlich auf das Eckventil 9 aufgeschoben. Diese Teile werden nun zusammengesetzt und der Klemmring gedreht, bis eine daran angebrachte schraubenförmig ansteigende Fläche 11 am Teil 9b des Eckventils 9 ansteht. Durch weiteres Drehen des Klemmringes wird der Verbindungsteil 15 an die Wand 14 gespannt. Nun werden die beiden Teile 1a und 1b zusammengeklappt und der Deckel 2 aufgesetzt. Die Abdeckung 1 ist wie in den Figuren 1 und 2 gezeigt damit lösbar am Eckventil 9 fixiert. Mit den genannten Handlungen in umgekehrter Reihenfolge kann die Abdeckung 1 in einfacher Weise und ohne Werkzeuge abgenommen werden.

## Patentansprüche

1. Abdeckung für ein an einer Wand (14) befestigtes Eckventil (9), mit zwei wenigstens teilweise trennbaren schalenförmigen Teilen (1a,1b), mit ersten Mitteln (3) zum Befestigen der Abdeckung (1) und zweiten Mitteln (2,12), welche die schalenförmigen Teile (1a,1b) lösbar miteinander verbinden, dadurch gekennzeichnet, dass die ersten Mittel eine zwischen den schalenförmigen Teilen (1a,1b) angeordnete Befestigungshülse (3) aufweisen, die mit diesen Teilen (1a,1b) eine Einheit bildet und seitlich auf das Eckventil (9) aufschiebbar und an diesem fixierbar ist und die mit den beiden schalenförmigen Teilen (1a,1b) fest verbunden ist.

2. Abdeckung nach Anspruch 1, dadurch gekennzeichnet, dass die beiden schalenförmigen Teile (1a,1b) über ein Gelenk (5) klappbar miteinander und mit der Befestigungshülse (3) verbunden sind.

3. Abdeckung nach Anspruch 2, dadurch gekennzeichnet, dass das Gelenk im Abstand zueinander angeordnete Filmscharniere (5) aufweist, und dass zwischen diesen Scharnieren die Befestigungshülse (3) angeordnet ist.

4. Abdeckung nach einem der Ansprüche 1 bis 3, dadurch gekennzeichnet, dass die Befestigungshülse (3) seitlich auf das Eckventil (9) aufsteckbar ist.

5. Abdeckung nach Anspruch 4, dadurch gekennzeichnet, dass zwischen den schalenförmigen Teilen (1a,1b) desweiteren ein Teil (10) angebracht ist, das mit der Befestigungshülse (3) derart zusammenwirkt, dass die Abdeckung (1) gegen die Wand (14) gespannt werden kann.

6. Abdeckung nach Anspruch 5, dadurch gekennzeichnet, dass das Teil ein Klemmring (10) ist und an einem die schalenförmigen Teile (1a,1b) mit der Befestigungshülse (3) verbindenden Verbindungsteil (15) drehbar gelagert ist und eine in Längsrichtung des senkrecht zur Wand (14) verlaufenden Teils des Eckventils schraubenförmig ansteigende Fläche (11) aufweist, derart, dass diese Fläche (11) durch Drehen des Klemmrings (10) an den parallel zur Wand (14) verlaufenden Teil des Eckventils (9) anlegbar und das Verbindungsteil (15) an die Wand (14) klemmbar ist.

7. Abdeckung nach einem der Ansprüche 1 bis 6, dadurch gekennzeichnet, dass die zweiten Mittel (2,12) einen Deckel (2) aufweisen, der auf die schalenförmigen Teile (1a,1b) lösbar aufgesetzt ist.

8. Abdeckung nach einem der Ansprüche 1 bis 7, dadurch gekennzeichnet, dass zwischen den schalenförmigen Teilen (1a,1b) eine Oeffnung (6) angeordnet ist, und dass in diese Oeffnung (6) eine Blende (7) eingesetzt ist, die eine weitere Oeffnung (8) für den Durchgang eines parallel zur Wand (14) verlaufenden Teils des Eckventils (9) aufweist.

9. Abdeckung nach einem der Ansprüche 1 bis 8, dadurch gekennzeichnet, dass die Abdeckung (1) aussen von der Wand (14) weg nach vorne hin keilförmig verjüngt ist.

## Claims

1. Cover for a corner valve (9) fastened to a wall (14), having two at least partially separable, saucer-shaped parts (1a, 1b), having first means (3) for fastening the cover (1) and second means (2, 12) which connect the saucer-shaped parts (1a, 1b) detachably to each other, characterised in that the first means exhibit a fastening sleeve (3), which is disposed between the saucer-shaped parts (1a, 1b) and forms a unit with these parts (1a, 1b), can be slid laterally onto the corner valve (9) and fixed thereto and is firmly connected to the two saucer-shaped parts (1a, 1b).

2. Cover according to Claim 1, characterised in that the two saucer-shaped parts (1a, 1b) are connected foldably to each other and to the fastening sleeve (3) by a joint (5).

3. Cover according to Claim 2, characterised in that the joint exhibits mutually spaced film hinges (5) and in that the fastening sleeve (3) is disposed between these hinges.

4. Cover according to one of Claims 1 to 3, characterised in that the fastening sleeve (3) can be fitted laterally onto the corner valve (9).

5. Cover according to Claim 4, characterised in that between the saucer-shaped parts (1a, 1b) there is further fitted a part (10), which interacts with the fastening sleeve (3) in such a way that the cover (1) can be clamped against the wall (14).

6. Cover according to Claim 5, characterised in that the part is a clamping ring (10) and is rotatably mounted on a connecting part (15) connecting the saucer-shaped parts (1a, 1b) to the fastening sleeve (3) and exhibits a surface (11) ascending helically in the longitudinal direction of that part of the corner valve running perpendicularly to the wall (14), such that this surface (11) can be applied, by rotation of the clamping ring (10), to that part of the corner valve (9) running parallel to the wall (14) and such that the connecting part (15) can be clamped to the wall (14).

7. Cover according to one of Claims 1 to 6, characterised in that the second means (2, 12) exhibit a cap (2) which is detachably mounted onto the saucer-shaped parts (1a, 1b).

8. Cover according to one of Claims 1 to 7, characterised in that an opening (6) is disposed between the saucer-shaped parts (1a, 1b) and in that into this opening (6) there is inserted a screen (7) exhibiting a further opening (8) for the passage of a part of the corner valve (9) running parallel to the wall (14).

9. Cover according to one of Claims 1 to 8, characterised in that, on its outside, the cover (1) is tapered in a wedge shape away from the wall (14) and towards the front.

## Revendications

1. Cache pour une soupape d'équerre (9) montée sur un mur (14), avec au moins deux parties en forme de coque (1a, 1b) au moins partiellement séparables, avec un premier moyen (3) pour fixer le cache (1) et des seconds moyens (2, 12) reliant entre elles de manière amovible les parties en forme de coque (1a, 1b), **caractérisé** en ce que le premier moyen consiste en une douille de fixation (3), qui est disposée entre les parties en forme de coque (1a, 1b), forme une unité avec ces parties (1a, 1b), peut être enfilée par le côté sur la soupape d'équerre (9) et fixée en position sur cette dernière, et est fixement assemblée aux deux parties en forme de coque (1a, 1b).

2. Cache selon la revendication 1, **caractérisé** en ce que les deux parties en forme de coque (1a, 1b) sont reliées entre elles et à la douille de fixation (3), avec possibilité de rabattement, par une articulation (5).

3. Cache selon la revendication 2, **caractérisé** en ce que l'articulation consiste en des charnières pelliculaires (5) disposées à distance l'une de l'autre, et en ce que la douille de fixation (3) est disposée entre ces charnières.

4. Cache selon l'une quelconque des revendications 1 à 3, **caractérisé** en ce que la douille de fixation (3) peut être emboîtée par le côté sur la soupape d'équerre (9).

5. Cache selon la revendication 4, **caractérisé** en ce qu'une pièce (10) est en outre disposée entre les parties en forme de coque (1a, 1b), laquelle coopère avec la douille de fixation (3) de telle sorte que le cache (1) peut être serré contre le mur (14).

6. Cache selon la revendication 5, **caractérisé** en ce que la pièce est un anneau de serrage (10), qui est monté à rotation sur une partie de liaison (15) reliant les parties en forme de coque (1a, 1b) à la douille de fixation (3) et qui présente une face (11), ascendante en hélice dans la direction longitudinale de la partie de la soupape d'équerre s'étendant perpendiculairement au mur (14), de sorte qu'en tournant l'anneau de serrage (10), cette face (11) peut être appliquée contre la partie de la soupape d'équerre (9) s'étendant parallèlement au mur (14), et la partie de liaison (15) peut être serrée contre le mur (14).

7. Cache selon l'une quelconque des revendications 1 à 6, **caractérisé** en ce que les seconds moyens (2, 12) comprennent un couvercle (2), qui est posé de manière amovible sur les parties en forme de coque (1a, 1b).

8. Cache selon l'une quelconque des revendications 1 à 7, **caractérisé** en ce qu'une ouverture (6) est présente entre les parties en forme de coque (1a, 1b), et en ce qu'un obturateur (7) est inséré dans cette ouverture (6) et présente lui-même une ouverture (8) pour le passage d'une partie de la soupape d'équerre (9) s'étendant parallèlement au mur (14).

9. Cache selon l'une quelconque des revendications 1 à 8, **caractérisé** en ce que le cache (1) est extérieurement rétréci en forme de coin, vers l'avant et en éloignement du mur (14).
